# FASCICULE DE BREVET EUROPEEN

(11) **EP 2 643 401 B1**
(45) Date de publication et mention de la délivrance du brevet: **14.10.2020**
(21) Numéro de dépôt: 11791255.0
(22) Date de dépôt: 24.11.2011
(51) Int. Cl.: C08K 5/00, C08L 9/06, B60C 1/00

(54) **BANDE DE ROULEMENT DE PNEUMATIQUE A ADHERENCE AMELIOREE SUR SOL MOUILLE**
REIFENLAUFFLÄCHEN MIT VERBESSERTER NASSGRIFFIGKEIT
TIRE TREAD HAVING ENHANCED WET GRIP

(30) Priorité: 26.11.2010 FR 1059785
(43) Date de publication de la demande: 02.10.2013
(73) Titulaire: Compagnie Générale des Etablissements Michelin, 63000 Clermont-Ferrand (FR)
(72) Inventeur: VASSEUR, Didier, F-63040 Clermont-Ferrand Cedex 9 (FR); LABRUNIE, Philippe, F-63040 Clermont-Ferrand Cedex 9 (FR); SAINTIGNY, Xavier, 63040 Clermont-Ferrand Cedex 9 (FR)
(74) Mandataire: Wroblewski, Nicolas Paul André
(86) Numéro de dépôt international: PCT/EP2011/070930
(87) Numéro de publication internationale: WO 2012/069585

(56) Documents cités:
- WO-A1-2009/125747
- US-B1- 7 259 205

## Description

Le domaine de l'invention est celui des compositions de caoutchouc pour pneumatiques, plus précisément des compositions de caoutchouc pour bandes de roulement.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ces compromis de propriétés, en particulier du point de vue de la résistance au roulement et de la résistance à l'usure, ont pu être améliorés ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques renforçantes, notamment de silices hautement dispersibles capables de rivaliser, du point de vue du pouvoir renforçant, avec les noirs de carbone conventionnels de grade pneumatique. L'amélioration des propriétés d'adhérence, particulièrement sur sol mouillé, reste cependant une préoccupation constante des concepteurs de pneumatiques.

Le document US 7 259 205 B1 décrit un bandage ayant une bande de roulement incluant une composition de caoutchouc vulcanisable incluant (A) de 60 à 95 pce de caoutchouc de styrène-butadiène polymérisé en solution avec une teneur en styrène lié de 20 à 30 pourcent en poids, une teneur en 1,2-vinyle de 50 à 70 pourcent en poids basés sur la teneur en butadiène, et une Tg d'environ de -40°C à environ -20°C ; (B) de 5 à 15 pce de cis-1,4-polybutadiène ayant une Tg de - 95°C à - 105°C ; (C) de 10 à 20 pce de 3.4-polyisoprène ; (D) de 30 à 70 pce d'huile de mise en œuvre ; (E) de 10 à 30 pce de noir de carbone ayant une absorption d'iode de 192 à 212 g/kg selon ASTM D-1510 et une absorption d'huile de 126 à 142 cc/100g selon ASTM D-2414 ; (F) de 90 à 110 pce de silice ; (G) de 0,5 à 20 pce d'un composé organosilicique contenant du soufre ; et (H) de 5 à 25 pce de résine.

Le document WO 2009/125747 A1 décrit des compositions de caoutchouc pour bandage, comprenant au moins un composant caoutchouc choisi parmi les caoutchoucs naturels et les caoutchoucs synthétiques et, incorporés dans le composant caoutchouc, (A) 0,1 à 45 parties en masse, par rapport à 100 parties en masse du composant caoutchouc, d'une résine terpène phénolique et (B) 1 à 150 parties en masse, par rapport à 100 parties en masse du composant caoutchouc, d'un plastifiant comprenant une huile de de mise en œuvre contenant un composé aromatique polycyclique (PCA) en une quantité telle que la teneur en extraits avec le diméthylsulfoxyde (DMSO), déterminée par la méthode IP 346, a été ajustée à moins de 3 %.

Le document EP-A-2 524 002 (Art. 54(3) CBE) décrit des compositions de caoutchouc utilisable pour constituer la bande de roulement d'un pneumatique qui comprend : (a) une matrice élastomère comprenant - de 60 à 95 pce d'au moins un élastomère diénique et - de 5 à 40 pce d'un élastomère thermoplastique TPE polaire comprenant au moins un bloc élastomère et un bloc thermoplastique polaire choisi parmi les homopolymère et copolymères d'un ester d'acide alkylacrylique, le radical alkyle contenant 1 à 4 atomes de carbone, et (b) une charge renforçante comprenant une charge inorganique renforçante, (c) un agent de couplage.

Le document US-A-2010/0099796 décrit des bandes de roulement de pneumatique comportant une composition de caoutchouc, ladite composition comprenant au moins un élastomère diénique, une charge renforçante et un système plastifiant, caractérisée en ce que ledit système plastifiant comporte en combinaison : une résine plastifiante hydrocarbonée dont la température de transition vitreuse est supérieure à 0 °C ; et un diester d'acide carboxylique répondant à la formule R - OOC - (CH₂)ₙ-COO-R, dans laquelle n est compris dans un domaine de 1 à 15 et les radicaux R, identiques ou différents, représentent un radical hydrocarboné.

Le document JP-A-2010-126672 décrit des compositions pour les bandes de roulement de bandage comprend 100 parties en poids de caoutchouc styrène-butadiène contenant au moins un caoutchouc styrène-butadiène ayant une température de transition vitreuse supérieure à -20°C et inférieure ou égale à -5°C, 10 à 50 parties en poids de polyisoprène ayant une masse molaire moyenne en nombre de 20 000 à 60 000, 5 à 30 parties en poids d'une résine terpène modifiée aromatique ayant un point de ramollissement de 80 à 130°C, 10 à 50 parties en poids de noir de carbone ayant une surface spécifique d'adsorption d'azote de 250 à 450 m²/g, et de 80 à 150 parties en poids de silice, dans lesquelles la quantité totale de noir de carbone et de silice est de 100 à 170 parties en poids.

Poursuivant leurs recherches, les Demanderesses ont découvert que l'utilisation d'un copolymère à base de styrène et de butadiène, selon un taux de 50 à 100 pce, d'un taux particulièrement élevé de charge inorganique renforçante combiné à un système plastifiant spécifique, permettait d'améliorer encore la performance d'adhérence sur sol mouillé de ces pneumatiques à basse résistance au roulement.

Ainsi l'invention a pour objet un pneumatique dont la bande de roulement comporte une composition de caoutchouc comportant au moins :
- 50 à 100 pce d'un copolymère à base de styrène et de butadiène présentant une température de transition vitreuse comprise entre -80°C et 0°C;
- optionnellement, 0 à 50 pce d'un autre élastomère diénique ;
- 100 à 150 pce d'une charge inorganique renforçante ;
- un système plastifiant comprenant :
   - selon un taux A compris entre 10 et 60 pce, une résine hydrocarbonée thermoplastique présentant une Tg supérieure à 20°C ;
   - selon un taux B compris entre 10 et 60 pce, un agent plastifiant liquide ;
   - étant entendu que le taux total A+B est supérieur à 50 pce.

Les pneumatiques de l'invention sont particulièrement destinés à équiper des véhicules à moteur de type tourisme, incluant les véhicules 4x4 (à quatre roues motrices) et véhicules SUV ("*Sport Utility Vehicles"*), des véhicules deux roues (notamment motos) comme des véhicules industriels choisis en particulier parmi camionnettes et poids-lourd tels que bus, engins de transport routier tels que camions.

L'invention ainsi que ses avantages seront aisément compris à la lumière de la description et des exemples de réalisation qui suivent.

### I. DESCRIPTION DETAILLEE DE L'INVENTION

Dans la présente description, sauf indication expresse différente, tous les pourcentages (%) indiqués sont des pourcentages en masse.

L'abréviation "pce" (usuellement *"phr"* en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse « Tg » sont mesurées de manière connue par DSC (Differential Scanning Calorimetry) selon la norme ASTM D3418 (1999).

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Le pneumatique de l'invention a donc pour caractéristique essentielle que sa bande de roulement comporte une composition de caoutchouc comprenant au moins un copolymère à base de styrène et de butadiène, un taux particulièrement élevé de charge inorganique renforçante et un système plastifiant spécifique, composants qui vont être décrits en détail ci-après.

### 1-1. Copolymère à base de styrène et de butadiène

Par copolymère à base de styrène et de butadiène, on entend ici un copolymère d'au moins un monomère styrène et d'au moins un monomère butadiène (et bien entendu également tout mélange de tels copolymères) ; en d'autres termes, ledit copolymère à base de styrène et de butadiène comporte par définition au moins des unités styrène (issues du monomère styrène) et des unités butadiène (issues du monomère butadiène).

Préférentiellement, le taux dudit copolymère, dans la composition de la bande de roulement, est compris dans un domaine de 60 à 100 pce, notamment dans un domaine de 70 à 100 pce.

A titre de monomères butadiène conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrène conviennent notamment le styrène, les méthylstyrènes, le para-tertiobutylstyrène, les méthoxystyrènes, les chlorostyrènes.

Ledit copolymère à base de styrène et de butadiène peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou solution ; il peut être couplé et/ou étoilé ou encore fonctionnalisé avec un agent de couplage et/ou d'étoilage ou de fonctionnalisation. On peut citer par exemple des groupes fonctionnels silanol ou polysiloxane ayant une extrémité silanol (tels que décrits par exemple dans EP 0 778 311 ou US 6 013 718), des groupes alkoxysilanes (tels que décrits par exemple dans EP 0 890 607 ou US 5 977 238, WO 2009/133068), des groupes carboxyliques (tels que décrits dans US 6 815 473 ou US 2006/0089445) ou encore des groupes polyéthers (tels que décrits par exemple dans US 6 503 973).

Selon un mode de réalisation particulier de l'invention, on utilise par exemple un copolymère à base de styrène et de butadiène, en particulier un SBR, qui est porteur d'au moins une (c'est-à-dire une ou plusieurs) fonction SiOR, R étant l'hydrogène ou un radical hydrocarboné comportant préférentiellement de 1 à 4 atomes de carbone, en particulier un méthyle ou un éthyle. Cette fonction SiOR peut se situer à une extrémité de la chaîne élastomère, à l'intérieur même de la chaîne élastomère ou encore comme groupe pendant le long de la chaîne élastomère ; dans le cas où il y a plusieurs fonctions SiOR portées par le copolymère, elles peuvent occuper l'une ou l'autre des configurations. Bien entendu, le copolymère ci-dessus, en particulier SBR, peut être un mélange d'un premier copolymère portant une fonction silanol et d'un deuxième copolymère portant une fonction SiOR (avec R radical hydrocarboné), notamment alcoxysilane.

De préférence, le copolymère à base de styrène et de butadiène est un copolymère styrène-butadiène (en abrégé SBR), ce SBR pouvant être un SBR émulsion ou ESBR (c'est-à-dire préparé par polymérisation en émulsion), un SBR solution ou SSBR (c'est-à-dire préparé par polymérisation en solution), ou un mélange des deux.

Parmi les copolymères à base de styrène et de butadiène, en particulier SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

La Tg du copolymère à base de styrène et de butadiène, en particulier du SBR (ESBR ou SSBR), est comprise entre 0 et -80°C, plus particulièrement entre 0°C et -70°C ; selon un mode de réalisation particulier, la Tg est comprise entre -5°C et -60°C, notamment dans un domaine de -10°C à -50°C. L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique.

Au copolymère à base de styrène et de butadiène ci-dessus, peut être associé éventuellement au moins un second élastomère diénique, différent dudit copolymère (c'est-à-dire ne comportant pas des unités issues de styrène et de butadiène), ledit second élastomère diénique, optionnel, étant présent à un taux pondéral qui est en conséquence au plus égal à 50 pce, préférentiellement au plus égal à 40 pce, notamment au plus égal à 30 pce (pour rappel, pce signifiant parties en poids pour cent parties d'élastomère, c'est-à-dire du total des élastomères présents dans la bande de roulement).

Ce second élastomère diénique éventuel est préférentiellement choisi dans le groupe constitué par les polybutadiènes (BR), le caoutchouc naturel (NR), les polyisoprènes de synthèse (IR), les copolymères de butadiène (autres que les copolymères à base de styrène et de butadiène), les copolymères d'isoprène et les mélanges de ces élastomères.

Parmi les polybutadiènes ou copolymères de butadiène, conviennent en particulier les polybutadiènes ayant une teneur (% molaire) en unités -1,2 comprise entre 4% et 80% ou ceux ayant une teneur (% molaire) en cis-1,4 supérieure à 80% plus particulièrement supérieure à 90%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Parmi les élastomères isopréniques (i.e., homopolymères ou copolymères d'isoprène), on citera en particulier NR, IR, les copolymères d'isoprène tels que copolymères d'isobutène-isoprène (caoutchouc butyle ou IIR), d'isoprène-styrène (SIR), d'isoprène-butadiène (BIR) ou d'isoprène-butadiène-styrène (SBIR). L'élastomère isoprénique est de préférence du caoutchouc naturel ou un polyisoprène cis-1,4 de synthèse ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Aux élastomères diéniques précédemment décrits pourraient être également associés, en quantité minoritaire, des élastomères synthétiques autres que diéniques, voire des polymères autres que des élastomères, par exemple des polymères thermoplastiques.

### I-2. Charge renforçante

La composition de caoutchouc de la bande de roulement du pneumatique conforme à l'invention a pour autre caractéristique essentielle de comporter une charge inorganique renforçante en quantité spécifique, dans une proportion de 100 à 150 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

Selon un mode de réalisation préférentiel de l'invention, la charge inorganique renforçante comprend de 50 à 100% en masse de silice ; en d'autres termes, la silice représente 50 à 100% en masse de la charge inorganique renforçante.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Le taux de charge inorganique renforçante, en particulier de silice, est de préférence supérieur à 100 pce et inférieur à 150 pce, plus préférentiellement compris dans un domaine de 105 à 145 pce, en particulier de 110 à 140 pce.

Selon un mode de réalisation avantageux, la composition de la bande de roulement peut comporter du noir de carbone. Le noir de carbone, lorsqu'il est présent, est utilisé de préférence à un taux inférieur à 20 pce, plus préférentiellement inférieur à 10 pce (par exemple entre 0,5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z , dans laquelle:

- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 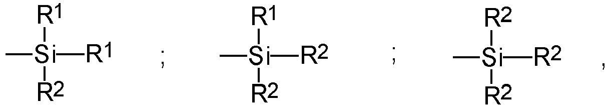 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### I-3. Système plastifiant

Une autre caractéristique essentielle de la composition de caoutchouc de la bande de roulement du pneumatique conforme à l'invention est de comporter un système plastifiant spécifique, comprenant d'une part selon un taux A compris entre 10 et 60 pce une résine hydrocarbonée thermoplastique présentant une Tg supérieure à 20°C, d'autre part selon un taux B compris entre 10 et 60 pce un plastifiant liquide, étant entendu que le taux total A+B est supérieur à 50 pce. Préférentiellement, le taux A est compris entre 10 et 50 pce et le taux B est compris entre 10 et 50 pce.

Selon un autre mode de réalisation préférentiel, le taux total A+B est compris entre 50 et 100 pce, plus préférentiellement entre 50 et 80, en particulier entre 50 et 70 pce.

Selon un autre mode de réalisation particulier de l'invention, le rapport de A sur B est compris entre 1 : 5 et 5 : 1 (soit entre 0,2 et 5,0), plus préférentiellement entre 1 : 4 et 4 : 1 (soit entre 0,25 et 4,0).

D'autre part et préférentiellement, le rapport massique de (A+B) sur la masse de charge inorganique renforçante, notamment de silice, est compris entre 35 et 70%, plus préférentiellement compris dans un domaine de 40 à 60%.

La dénomination "résine" est réservée dans la présente demande, par définition, à un composé qui est solide à température ambiante (23°C), par opposition à un agent plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Le système plastifiant comporte d'autre part un plastifiant liquide (à 23°C) dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*), les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols.

Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides ; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

### I-4. Additifs divers

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement de pneumatiques, notamment pneumatiques, des charges autres que celles précitées, par exemple des charges non renforçantes comme la craie ou bien des charges lamellaires comme le kaolin, le talc, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru ; ces agents sont par exemple des silanes hydrolysables tels que des alkyl-alkoxysilanes, des polyols, des polyéthers, des aminés, des polyorganosiloxanes hydroxylés ou hydrolysables.

### I-5. Préparation des compositions de caoutchouc

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge inorganique renforçante, l'agent de couplage, le cas échéant le noir de carbone, le système plastifiant, jusqu'à atteindre une température maximale comprise entre 110°C et 190°C (phase dite «non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneumatique, notamment pour véhicule tourisme.

L'invention s'applique également aux cas où les compositions de caoutchouc précédemment décrites forment une partie seulement de bandes de roulement du type composites ou hybrides, notamment celles constituées de deux couches radialement superposées de formulations différentes (structure dite *"cap-base"*), toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

Selon un mode de réalisation particulier, la dureté Shore A de la composition de caoutchouc selon l'invention est comprise dans un domaine allant de 60 à 75 ; la dureté Shore A des compositions après cuisson est appréciée conformément à la norme ASTM D 2240-86.

L'invention concerne les pneumatiques précédemment décrits tant à l'état cru (c'est à dire, avant cuisson) qu'à l'état cuit (c'est à dire, après réticulation ou vulcanisation).

### II. EXEMPLES DE REALISATION DE L'INVENTION

### II. 1 - Préparation des compositions

On procède pour les essais qui suivent de la manière suivante : on introduit dans un mélangeur interne (taux de remplissage final : environ 70% en volume), dont la température initiale de cuve est d'environ 60°C, successivement les élastomères, la silice, l'agent de couplage, les plastifiants ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions sont finalement extrudées sous la forme d'une bande de roulement de pneumatique tourisme, pour être testées comme indiqué dans le paragraphe qui suit.

### II.2 - Essais en pneumatiques

### Essai A

Pour les besoins de ce premier essai, deux compositions de caoutchouc (notée ci-après A-1 et A-2) ont été préparées dont la formulation est donnée dans le tableau 1, le taux des différents produits étant exprimés en pce (parties en poids pour cent parties d'élastomère total).

La composition témoin (A-1) est une composition conventionnelle pour «Pneu Vert » à faible résistance au roulement, de formulation bien connue de l'homme du métier, à base d'un coupage d'élastomères synthétiques BR et SBR (SBR solution fonctionnalisé silanol, tel que décrit dans le brevet EP 0 778 311 précité), comportant 85 pce de charge inorganique renforçante (silice), un agent de couplage et, à titre de système plastifiant, d'une part 15 pce d'agent plastifiant liquide (huile végétale) et d'autre part 10 pce de résine thermoplastique (résine de copolymère C5/C9) ; dans cette composition témoin, le total de plastifiant est donc égal à 25 pce.

La composition selon l'invention (A-2) est identique à la composition témoin (A-1) à la différence près que son taux de charge inorganique renforçante est augmentée de manière notable, à une valeur supérieure à 100 pce, qu'elle comporte d'une part 33 pce d'agent plastifiant liquide (huile végétale + huile TDAE) et d'autre part 20 pce de résine thermoplastique (résine C5/C9) ; dans cette composition selon l'invention, le total (A+B) de système plastifiant, supérieur à 50 pce, est donc très nettement augmenté par rapport à la composition témoin.

Ces compositions A-1 et A-2 sont utilisées comme bandes de roulement de pneumatiques tourisme à carcasse radiale, notés respectivement P-1 (pneus témoins) et P-2 (pneus selon l'invention), de dimensions 225/55R16, conventionnellement fabriqués et en tous points identiques hormis les compositions de caoutchouc constitutives de leur bande de roulement.

Les pneumatiques sont montés, à l'avant et à l'arrière, sous pression de gonflage nominale, sur un véhicule automobile de marque « BMW », modèle 530, équipé d'un système ABS.

Les pneumatiques sont ensuite soumis à un test de freinage sur sol mouillé à 10°C consistant à mesurer la distance nécessaire pour passer de 80 km/h à 10 km/h lors d'un freinage brutal sur sol arrosé (béton bitumineux). Une valeur supérieure à celle du témoin, arbitrairement fixée à 100, indique un résultat amélioré, c'est-à-dire une distance de freinage plus courte.

Les résultats obtenus sont indiqués dans le tableau 2 annexé. On constate de manière inattendue que la performance de freinage sur sol mouillé est très nettement améliorée, d'environ 10% : ce résultat correspond dans ce test à une distance de freinage raccourcie d'environ 4 mètres, donc de manière tout à fait significative.

### Essai B

Pour les besoins de ce deuxième essai, deux autres compositions de caoutchouc (notées B-1 et B-2) ont été préparées dont la formulation est donnée dans le tableau 3.

La composition témoin (B-1) est une autre composition conventionnelle pour « Pneu Vert » à faible résistance au roulement, à base de BR et SBR, comportant 80 pce de silice, un agent de couplage et, à titre de plastifiant, 15 pce d'agent plastifiant liquide (huile MES) et 20 pce de résine thermoplastique (résine polylimonène), soit un total A+B de plastifiant égal à 35 pce. La composition selon l'invention (B-2) utilise quant à elle 100 pce de copolymère SBR (SBR préparé en solution et fonctionnalisé alcoxysilane selon WO 2009/133068) ; elle diffère en outre de la composition témoin B-1 par son taux plus élevé de charge inorganique renforçante, supérieur à 100 pce, et par un total (A+B) de système plastifiant très nettement augmenté (puisque quasiment doublé) par rapport à la composition témoin (B-1).

Ces compositions B-1 et B-2 sont utilisées comme bandes de roulement de pneumatiques tourisme à carcasse radiale, notés respectivement P-1 (pneus témoins) et P-2 (pneus selon l'invention), de dimensions 205/55R16 conventionnellement fabriqués et en tous points identiques, hormis les compositions de caoutchouc constitutives de leur bande de roulement.

Comme précédemment, les pneumatiques sont montés, à l'avant et à l'arrière, sous pression de gonflage nominale, sur un véhicule automobile de marque « Volkswagen », modèle « Golf 6 », équipé d'un système ABS.

Puis les pneumatiques sont soumis à un autre test d'adhérence sur sol mouillé, consistant cette fois à mesurer le temps minimal nécessaire au véhicule pour parcourir un circuit fortement virageux et arrosé de manière à maintenir le sol humide, sous des conditions de vitesse limite. Une valeur supérieure à celle du témoin, arbitrairement fixée à 100, indique un résultat amélioré c'est-à-dire un temps de parcours plus court.

La résistance au roulement est également mesurée sur volant, selon la méthode ISO 87-67 (1992). Une valeur supérieure à celle du témoin, arbitrairement fixée à 100, indique un résultat amélioré c'est-à-dire une résistance au roulement plus basse.

Les résultats obtenus sont indiqués dans le tableau 4 annexé.

On constate de manière surprenante que les pneumatiques de l'invention (P-2) permettent d'améliorer de manière très sensible la performance d'adhérence sur sol mouillé, avec un temps de parcours réduit de 5 % (soit 5 secondes de moins pour un tour de circuit durant environ 100 secondes) par rapport aux pneumatiques témoins (P-1), ce qui est très significatif pour un tel test. On note que ce résultat est obtenu qui plus est, ce qui est remarquable, sans pénalisation de la résistance au roulement.

En conclusion, les pneumatiques conformes à l'invention présentent une performance d'adhérence sur sol mouillé qui est fortement améliorée grâce à la formulation spécifique de leur bande de roulement, combinant notamment des taux particulièrement élevés de charge inorganique renforçante et de système plastifiant.

**Tableau 1**

| Composition n°: | A-1 | A-2 |
|---|---|---|
| BR (1) | 20 | 20 |
| SBR (2) | 80 | 80 |
| silice (3) | 85 | 120 |
| agent de couplage (4) | 6.8 | 9.6 |
| noir de carbone (5) | 3 | 3 |
| plastifiant liquide (6) | | 8 |
| plastifiant liquide (7) | 15 | 25 |
| résine plastifiante (8) | 10 | 20 |
| total plastifiant | 25 | 53 |
| acide stéarique | 2 | 2 |
| cire anti-ozone | 1.5 | 1.5 |
| antioxydant (9) | 2 | 2 |
| DPG (10) | 1.6 | 1.6 |
| ZnO | 1.3 | 1.3 |
| accélérateur (11) | 1.6 | 1.6 |
| soufre | 1 | 1 |

| | | |
|---|---|---|
| (1) BR avec 4% de motif 1,2 et 93% de motif 1,4-cis (Tg = -106°C) ; (2) SBR : SBR solution (fonctionnalisé silanol) avec 44% de motif styrène et 41% de motif 1,2 de la partie butadiénique (Tg = -12°C) ; (3) Silice « Zeosil 1165 MP » de la société Rhodia (type HDS) ; (4) agent de couplage TESPT (« Si69 » de la société Degussa) ; (5) grade ASTM N234 (société Cabot) ; (6) huile TDAE (« Vivatec 500 » de la société Klaus Dahleke) ; (7) huile de tournesol à 85% en poids d'acide oléique (« Lubrirob Tod 1880 » de la société Novance) ; (8) résine C5/C9 (« Escorez ECR-373 » de la société Exxon) ; (9) N-(1,3-diméthylbutyl)-N'-phényl-p-phénylènediamine, de la société Flexsys ; (10) Diphénylguanidine (« Perkacit » DPG de la société Flexsys) ; (11) N-dicylohexyl-2-benzothiazol-sulfénamide (« Santocure CBS » de la société Flexsys). | | |

**Tableau 2**

| Pneumatique : | P-1 | P-2 |
|---|---|---|
| Freinage sur sol mouillé | 100 | 111 |

**Tableau 3**

| Composition n°: | B-1 | B-2 |
|---|---|---|
| BR (1) | 25 | - |
| SBR (2) | 75 | - |
| SBR (3) | - | 100 |
| silice (4) | 80 | 110 |
| agent de couplage (5) | 6.4 | 8.8 |
| noir de carbone (6) | 3 | 3 |
| plastifiant liquide (7) | 15 | - |
| plastifiant liquide (8) | - | 15 |
| résine plastifiante (9) | 20 | 45 |
| total plastifiant | 35 | 60 |
| acide stéarique | 2 | 2 |
| cire anti-ozone | 1.8 | 1.8 |
| antioxydant (10) | 2.6 | 2.6 |
| DPG (11) | 1.8 | 1.8 |
| ZnO | 1.2 | 1.2 |
| accélérateur (12) | 2.3 | 2.3 |
| soufre | 1 | 1 |

| | | |
|---|---|---|
| (1) BR avec 4% de motifs 1,2 et 93% de motifs 1,4-cis (Tg = -106°C) ; (2) SBR solution avec 25% de motifs styrène et 58% de motifs 1,2 de la partie butadiénique (Tg = -24°C) ; (3) SBR solution (fonctionnalisé alkoxysilane) avec 27% de motifs styrène et 24% de motifs 1,2 de la partie butadiénique (Tg = -48°C) ; (4) silice « Zeosil 1165 MP » de la société Rhodia (type HDS) ; (5) agent de couplage TESPT (« Si69 » de la société Degussa) ; (6) grade ASTM N234 (société Cabot) ; (7) huile MES (« Catenex SNR » de la société Shell) ; (8) huile de tournesol à 85% en poids d'acide oléique (« Lubrirob Tod 1880 » de la société Novance) ; (9) résine polylimonène (« Dercolyte L120 » de la société DRT) ; (10) N-(1,3-diméthylbutyl)-N'-phényl-p-phénylènediamine (société Flexsys) ; (11) Diphénylguanidine (« Perkacit » DPG de la société Flexsys) ; (12) N-dicylohexyl-2-benzothiazol-sulfénamide (« Santocure CBS » de la société Flexsys). | | |

**Tableau 4**

| Pneumatique : | P-1 | P-2 |
|---|---|---|
| Adhérence sur sol mouillé | 100 | 105 |
| Résistance au roulement | 100 | 100 |

## Revendications

1. Pneumatique dont la bande de roulement comporte une composition de caoutchouc comprenant au moins :
- 50 à 100 pce d'un copolymère à base de styrène et de butadiène présentant une température de transition vitreuse comprise entre -80°C et 0°C ;
- optionnellement, 0 à 50 pce d'un autre élastomère diénique ;
- 100 à 150 pce d'une charge inorganique renforçante ;
- un système plastifiant comprenant :
- selon un taux A compris entre 10 et 60 pce, une résine hydrocarbonée thermoplastique présentant une Tg supérieure à 20°C ;
- selon un taux B compris entre 10 et 60 pce, un agent plastifiant liquide ;
- étant entendu que le taux total A+B est supérieur à 50 pce.

2. Pneumatique selon la revendication 1, dans lequel le copolymère à base de styrène et de butadiène est un copolymère styrène-butadiène.

3. Pneumatique selon la revendication 1 ou 2, dans lequel l'autre élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

4. Pneumatique selon la revendication 3, dans lequel l'autre élastomère diénique est un polybutadiène.

5. Pneumatique selon la revendication 3, dans lequel l'autre élastomère diénique est du caoutchouc naturel ou un polyisoprène de synthèse.

6. Pneumatique selon l'une quelconque des revendications 1 à 5, dans lequel le taux de copolymère à base de styrène et de butadiène est compris dans un domaine de 60 à 100 pce, de préférence de 70 à 100 pce.

7. Pneumatique selon l'une quelconque des revendications 1 à 6, dans lequel le taux de charge inorganique renforçante est compris dans un domaine allant de 105 à 145 pce, de préférence de 110 à 140 pce.

8. Pneumatique selon l'une quelconque des revendications 1 à 7, dans lequel la charge inorganique renforçante comprend 50 à 100% en masse de silice.

9. Pneumatique selon l'une quelconque des revendications 1 à 8, dans lequel A est compris entre 10 et 50 pce et B est compris entre 10 et 50 pce.

10. Pneumatique selon l'une quelconque des revendications 1 à 9, dans lequel A+B est compris entre 50 et 100, de préférence entre 50 et 80 pce.

11. Pneumatique selon l'une quelconque des revendications 1 à 10, dans lequel le rapport de A sur B est compris entre 1 : 5 et 5 : 1, de préférence entre 1 : 4 et 4 : 1.

12. Pneumatique selon l'une quelconque des revendications 1 à 11, dans lequel la résine hydrocarbonée thermoplastique est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines.

13. Pneumatique selon l'une quelconque des revendications 1 à 12, dans lequel l'agent plastifiant liquide est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

14. Pneumatique selon la revendication 13, dans lequel l'agent plastifiant liquide est choisi dans le groupe constitué par les huiles MES, les huiles TDAE, les huiles naphténiques, les huiles végétales et les mélanges de ces huiles.

15. Pneumatique selon l'une quelconque des revendications 1 à 14, dans lequel le rapport massique de (A+B) sur la masse de charge inorganique renforçante est compris entre 35 et 70%, préférentiellement compris dans un domaine allant de 40 à 60%.

## Patentansprüche

1. Reifen, dessen Lauffläche eine Kautschukzusammensetzung umfasst, die mindestens Folgendes umfasst:
- 50 bis 100 phe eines Copolymers auf Basis von Styrol und Butadien mit einer Glasübergangstemperatur zwischen -80 °C und 0 °C;
- gegebenenfalls 0 bis 50 phe eines anderen Dienelastomers;
- 100 bis 150 phe eines verstärkenden anorganischen Füllstoffs;
- ein Weichmachersystem, umfassend:
- ein thermoplastisches Kohlenwasserstoffharz mit einer Tg von mehr als 20 °C gemäß einem Gehalt A zwischen 10 und 60 phe;
- einen flüssigen Weichmacher gemäß einem Gehalt B zwischen 10 und 60 phe;
- wobei es sich versteht, dass der Gesamtgehalt A + B mehr als 50 phe beträgt.

2. Reifen nach Anspruch 1, wobei es sich bei dem Copolymer auf Basis von Styrol und Butadien um ein Styrol-Butadien-Copolymer handelt.

3. Reifen nach Anspruch 1 oder 2, wobei das andere Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

4. Reifen nach Anspruch 3, wobei es sich bei dem anderen Dienelastomer um ein Polybutadien handelt.

5. Reifen nach Anspruch 3, wobei es sich bei dem anderen Dienelastomer um Naturkautschuk oder ein synthetisches Polyisopren handelt.

6. Reifen nach einem der Ansprüche 1 bis 5, wobei der Gehalt an Copolymer auf Basis von Styrol und Butadien im Bereich von 60 bis 100 phe, vorzugsweise von 70 bis 100 phe, liegt.

7. Reifen nach einem der Ansprüche 1 bis 6, wobei der Gehalt an verstärkendem anorganischem Füllstoff im Bereich von 105 bis 145 phe, vorzugsweise von 110 bis 140 phe, liegt.

8. Reifen nach einem der Ansprüche 1 bis 7, wobei der verstärkende anorganische Füllstoff 50 bis 100 Massen-% Kieselsäure umfasst.

9. Reifen nach einem der Ansprüche 1 bis 8, wobei A zwischen 10 und 50 phe liegt und B zwischen 10 und 50 phe liegt.

10. Reifen nach einem der Ansprüche 1 bis 9, wobei A + B zwischen 50 und 100 phe, vorzugsweise zwischen 50 und 80 phe, liegt.

11. Reifen nach einem der Ansprüche 1 bis 10, wobei das Verhältnis von A zu B zwischen 1:5 und 5:1, vorzugsweise zwischen 1:4 und 4:1, liegt.

12. Reifen nach einem der Ansprüche 1 bis 11, wobei das thermoplastische Kohlenwasserstoffharz aus der Gruppe bestehend aus Cyclopentadien-Homopolymer- oder Copolymerharzen, Dicyclopentadien-Homopolymer- oder Copolymerharzen, Terpen-Homopolymer- oder Copolymerharzen, C5-Schnitt-Homopolymer- oder Copolymerharzen, C9-Schnitt-Homopolymer- oder Copolymerharzen, alpha-Methylstyrol und Mischungen dieser Harze ausgewählt ist.

13. Reifen nach einem der Ansprüche 1 bis 12, wobei der flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

14. Reifen nach Anspruch 13, wobei der flüssige Weichmacher aus der Gruppe bestehend aus MES-Ölen, TDAE-Ölen, naphthenischen Ölen, Pflanzenölen und Mischungen dieser Öle ausgewählt ist.

15. Reifen nach einem der Ansprüche 1 bis 14, wobei das Massenverhältnis von (A + B) zur Masse von verstärkendem anorganischem Füllstoff zwischen 35 und 70 %, vorzugsweise in einem Bereich von 40 bis 60 %, liegt.

## Claims

1. Tyre, the tread of which comprises a rubber composition comprising at least:
- from 50 to 100 phr of a copolymer based on styrene and butadiene showing a glass transition temperature comprised between -80°C and 0°C;
- optionally from 0 to 50 phr of another diene elastomer;
- from 100 to 150 phr of a reinforcing inorganic filler;
- a plasticizing system comprising:
- according to a content A of between 10 and 60 phr, a thermoplastic hydrocarbon resin exhibiting a Tg of greater than 20°C;
- according to a content B of between 10 and 60 phr, a liquid plasticizing agent;
- it being understood that the total content A+B is greater than 50 phr.

2. Tyre according to Claim 1, in which the copolymer based on styrene and butadiene is a styrene/butadiene copolymer.

3. Tyre according to Claim 1 or Claim 2, in which the other diene elastomer is selected from the group consisting of polybutadienes, natural rubber, synthetic polyisoprenes, butadiene copolymers, isoprene copolymers and the mixtures of these elastomers.

4. Tyre according to Claim 3, in which the other diene elastomer is a polybutadiene.

5. Tyre according to Claim 3, in which the other diene elastomer is natural rubber or a synthetic polyisoprene.

6. Tyre according to any one of Claims 1 to 5, in which the content of copolymer based on styrene and butadiene is within a range from 60 to 100 phr, preferably from 70 to 100 phr.

7. Tyre according to any one of Claims 1 to 6, in which the content of reinforcing inorganic filler is within a range extending from 105 to 145 phr, preferably from 110 to 140 phr.

8. Tyre according to any one of Claims 1 to 7, in which the reinforcing inorganic filler comprises from 50% to 100% by weight of silica.

9. Tyre according to any one of Claims 1 to 8, in which A is between 10 and 50 phr and B is between 10 and 50 phr.

10. Tyre according to any one of Claims 1 to 9, in which A+B is between 50 and 100 phr, preferably between 50 and 80 phr.

11. Tyre according to any one of Claims 1 to 10, in which the ratio of A to B is between 1:5 and 5:1, preferably between 1:4 and 4:1.

12. Tyre according to any one of Claims 1 to 11, in which the thermoplastic hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and the mixtures of these resins.

13. Tyre according to any one of Claims 1 to 12, in which the liquid plasticizing agent is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

14. Tyre according to Claim 13, in which the liquid plasticizing agent is selected from the group consisting of MES oils, TDAE oils, naphthenic oils, vegetable oils and the mixtures of these oils.

15. Tyre according to any one of Claims 1 to 14, in which the ratio by weight of (A+B) to the weight of reinforcing inorganic filler is between 35% and 70%, preferably within a range extending from 40% to 60%.
